# EUROPEAN PATENT SPECIFICATION

(11) **EP 4 549 146 B1**
(45) Date of publication and mention of the grant of the patent: **13.05.2026**
(21) Application number: 24208799.7
(22) Date of filing: 24.10.2024
(51) Int. Cl.: B32B 18/00, C04B 35/573, C04B 35/634, C04B 35/80

(54) **PRE-SHAPED SPACE FILLERS FOR SMALL CROSS SECTION FEATURES**
VORGEFORMTE RAUMFÜLLER FÜR KLEINE QUERSCHNITTMERKMALE
ÉLÉMENTS DE REMPLISSAGE D'ESPACE PRÉ-FORMÉS POUR DE PETITES CARACTÉRISTIQUES DE SECTION TRANSVERSALE

(30) Priority: 24.10.2023 US 202318493599
(43) Date of publication of application: 07.05.2025
(73) Proprietor: RTX Corporation, Farmington, CT 06032 (US)
(72) Inventor: READ, Kathryn S., East Hartford, 06118 (US); ENOS, Shaun M., East Hartford, 06118 (US); FERNANDEZ, Robin H., East Hartford, 06118 (US); LILES, Howard J., East Hartford, 06118 (US); CAMPBELL, Christian X., East Hartford, 06118 (US); SURACE, Raymond, East Hartford, 06118 (US); RIEHL, John D., East Hartford, 06118 (US); LOWERY, Morgan, East Hartford, 06118 (US); ROSENFELD, Peter J., Westport, 02790 (US)
(74) Representative: Dehns

(56) References cited:
- WO-A1-2023/122009
- US-A1- 2008 124 512
- US-A1- 2017 029 579
- US-A1- 2023 145 812
- US-B2- 10 414 142

## Description

### BACKGROUND

The present invention relates to ceramic matrix composites and, more particularly, space filling inserts for use in ceramic matrix composite preforms.

Many ceramic matrix composite (CMC) components for gas turbine engines have open spaces between plies due to complex geometries. Some of these spaces are too small to form with textile-based plies, but too large to form using individual fiber tows. In such cases, space filling inserts can be used to build upon and prevent large voids in the body of the CMC. These spaces themselves can be complexly shaped, for example, having non-constant geometries in one or more directions. Accordingly, means for optimizing space filling inserts to fill these spaces are desirable.

### SUMMARY

A method of fabricating a variable geometry space filling insert for a ceramic matrix composite component includes arranging a plurality of fiber bodies into a preform insert, applying a polymer binder to the plurality of fiber bodies, trimming at least a first subset of the plurality of fiber bodies such that each of the first subset of fiber bodies is shorter than at least a second subset of fiber bodies, shaping the insert with a forming tool to form a shaped insert.

A variable geometry space filling insert for use in a ceramic matrix composite component includes a plurality of fiber bodies in a bundle, the bundle including a first subset of fiber bodies, and a second subset of fiber bodies, each being longer than each of the first subset of fiber bodies.

Features of embodiments are set forth in the dependent claims. The documents US2023/145812A1, WO2023/122009A1 and US2008/124512A1 all describe inserts.

### BRIEF DESCRIPTION OF THE DRAWINGS

FIG. 1 is a simplified perspective view of a preform with a triangular space filling insert.
FIG. 2 is a simplified perspective view of the insert of FIG. 1, showing its non-constant cross-sectional geometry as a function of location along its length.
FIGS 3A, 3B, and 3C are simplified side views of alternative preform insert fiber arrangements.
FIG. 3D is a simplified cross-sectional view of a preform insert with sacrificial polymer yarns.
FIG. 4 is a flowchart illustrating select steps of a method for fabricating a space filling insert for a preform.

While the above-identified figures set forth one or more embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which fall within the scope of the invention as defined in the claims. The figures may not be drawn to scale, and applications and embodiments of the present invention may include features and components not specifically shown in the drawings.

### DETAILED DESCRIPTION

This disclosure presents various space filling inserts, sometimes referred to as "noodles," for incorporation into a CMC preform. These inserts can be advantageously pre-shaped to the dimensions of non-uniform open spaces within a preform.

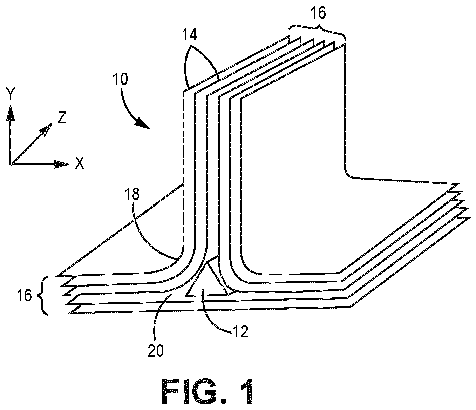

FIG. 1 is a simplified perspective view of preform 10 with space filling insert 12. Preform 10 can be used to form a CMC component for use in a gas turbine engine combustor, compressor, and/or turbine section, to name a few non-limiting examples. Preform 10 is formed from multiple plies 14 laid up in such a manner as to form a structure with a desired shape and thickness. Plies 14 can be formed from braided, woven, and/or chopped ceramic fibers or tows. The ceramic material can be silicon carbide (SiC) or another suitable ceramic material. As shown in FIG. 1, plies 14 can be laid up to form walls 16 with curved regions 18. The bending of plies 14 to form curved region 18 can create a void 20 between a subset of plies 14. Void 20 can be too small to effectively fill with additional plies 14. Thus, insert 12 can be formed to have a shape and size generally complementary to void 20. More specifically, insert 12 can be formed to have a complementary triangular cross-sectional geometry, a thickness or width defined in one or a combination of the x and y-axes, and a length extending along the z-axis. Generally speaking, insert 12 is sized and shaped to fill void 20 along the x, y, and z-axes. Other cross-sectional geometries (e.g., rectangular, rounded, curvilinear, etc.) are contemplated herein as appropriate to the geometry of void 20. In some cases, void 20 can have a non-constant (i.e., variable) cross-sectional geometry as a function of location along its length, for example, tapering in the direction of the z-axis, so a similarly shaped insert 12 is necessary to complement the geometry of void 20. Such voids can be found, for example, in airfoil preforms with variably shaped cavities (e.g., trailing edge cavities) in the spanwise (i.e., z-axis) direction.

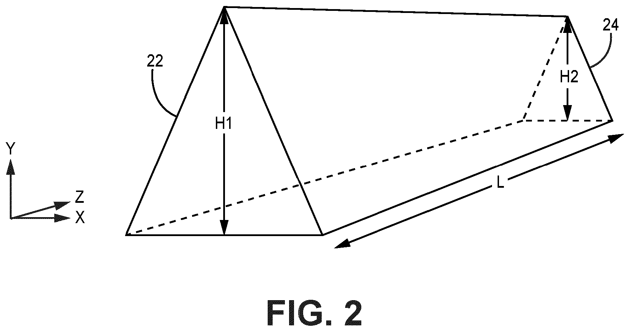

FIG. 2 is a simplified perspective view of insert 12 shown with a variable cross-sectional geometry. More specifically, insert 12, as shown, tapers along its length L in the x and y-directions, such that the area defined by the x-y plane is greater at first end 22 than at second end 24. For example, height H1 at first end 22 and height H2 at second end are shown, and H1 is greater than H2. In an alternative embodiment, insert 12 can taper from first end 22 toward its center and widen from the center towards second end 24. Insert 12 can also vary in other ways, such as non-linearly or along a single axis, including a change in shape, to name a few non-limiting examples.

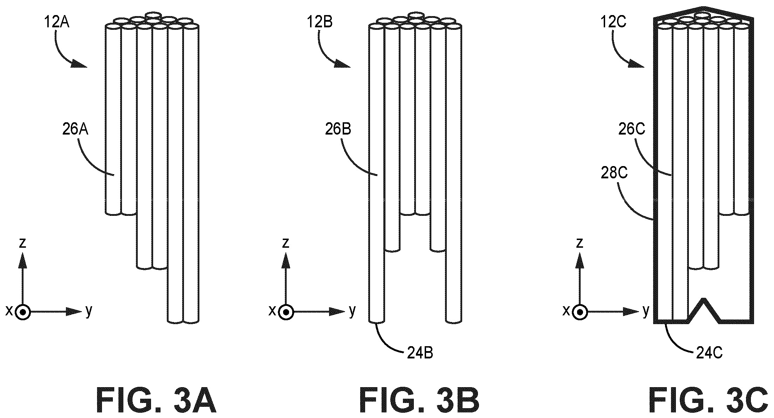

FIGS 3A, 3B, and 3C are simplified side views of preform inserts 12A, 12B, and 12C with differing arrangements of variously sized fiber bodies 26A, 26B, and 26C (collectively referred to as "fiber bodies 26"), respectively, for creating an insert having a variable cross-sectional geometry (e.g., insert 12). Individual fiber bodies 26 can, in one example, be tows of bundled ceramic fibers (e.g., a Silicon Carbide (SiC) fiber such as Nicalon^{™} SiC). In an alternative embodiment, each fiber body 26 can instead be a strand of braided tows. Such strands can be formed of braided tows or bundles of twisted pairs of tows. Preform inserts 12A-12C (as well as 12D discussed below) are those which are in process and have not yet been incorporated into the greater preform (e.g., preform 10).

In FIG. 3A, preform insert 12A has a stepped arrangement of fiber bodies 26A increasing in length (i.e., dimension along the z-axis) from left to right based on the depicted orientation of preform insert 12A. In FIG. 3B, preform insert 12B has a mirrored arrangement such that the longest fiber bodies 26B are along the periphery of preform insert 12B, and the length decreases for each fiber body 26B moving toward the center of preform insert 12B. In such an embodiment, the longest fiber bodies 26B can be pinched together at second end 24B to achieve a tapered shape similar to insert 12. In FIG. 3C, preform insert 12C has a sheathed arrangement such that fabric sheath 28C is disposed around fiber bodies 26C to form the outermost surface of preform insert 12C. Sheath 28C can be formed of one or more small fibrous ceramic plies which can be woven or braided in some embodiments. Sheath 28C need not fully circumscribe fiber bodies 26C in all embodiments. Fiber bodies 26C within sheath 28C have various lengths. Like preform insert 12B, sheath 28C can be pinched together at second end 24C to achieve a tapered shape. A similar fabric sheath can be used with inserts 12A and/or 12B and can generally help maintain the respective bundled fiber bodies 26 held within. In any of the foregoing embodiments, there can be up to eight different fiber body lengths in a given preform insert.

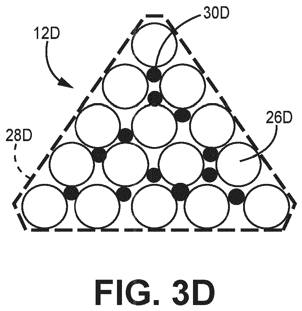

FIG. 3D is a simplified cross-sectional view of the fiber arrangement of preform insert 12D, which can have an arrangement of any of preform inserts 12A, 12B, and 12C with fiber bodies 26D of varied lengths. Preform insert 12D can optionally include sheath 28D, represented with dashed lines in FIG. 3D. Sheath 28D can be substantially similar to sheath 28C. Preform insert 12D further includes sacrificial polymer yarns 30D disposed between adjacent fiber bodies 26D to maintain some spacing between adjacent fiber bodies 26D through the application of interface coating(s) to ensure more even deposition of such coating(s). In an exemplary embodiment, polymer yarns 30D can be PVA yarns. Polymer yarns 30D are thermally decomposed prior to matrix formation. Polymer yarns 30D can be incorporated into any of preform inserts 12A-12C.

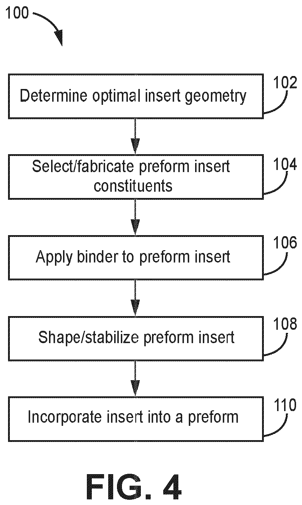

FIG. 4 is a method flowchart illustrating steps 102-110 of method 100 for fabricating a variable geometry space filling insert (e.g., insert 12). At step 102, the desired geometry of the insert for a particular void can be determined via experimentation and/or modeling based on the expected geometry of a preform void (e.g., void 20). At step 104, preform insert constituents can be fabricated and/or assembled. This includes the fabrication/selection of suitable fiber bodies via bundling, braiding, etc., then trimmed based on the desired geometry. A fabric sheath and/or polymer yarns, if desired for a particular preform insert, can also be fabricated. At step 106, a polymer binder can optionally be applied to any of the preform insert constituents to help stabilize the preform insert during processing. Exemplary binders can include solutions of polyvinyl alcohol (PVA) in water, or polyvinyl butyral (PVB) in an alcohol (e.g., ethanol) solvent, or other suitable solvent. The binder can further include inorganic particles, such as SiC or other ceramics. Such particles are intended to remain as part of the preform insert through matrix formation and help enhance matrix formation. In some embodiments, binder application can occur prior to any trimming performed in step 104. At step 108, preform insert constituents can be placed into a forming tool to help shape the preform insert. Additional amounts of polymer binder can be applied during step 108. Stabilization via heating with vacuum, mechanical compression and/or vacuum compression can also be carried out while preform insert is in the forming tool. At step 110, the shaped and/or stabilized insert can be removed from the forming tool, trimmed, if necessary, and incorporated into the preform. Depending on the preform, incorporation can include insertion into a void, laying up with additional plies, or three-dimensionally weaving the surrounding preform fabric around the insert.

A preform including one or more inserts 12 can subsequently undergo matrix formation and densification using a chemical vapor infiltration (CVI) process to form a CMC component. During densification, the braided layers 32 are infiltrated by reactant vapors, and a gaseous precursor deposits on the ceramic fibers. The matrix material can be SiC or other suitable ceramic material. Densification is carried out until the resulting CMC has reached the desired residual porosity. Interface coating(s) (e.g., of boron nitride - BN) can be deposited prior to the matrix to ensure that the composite fails in a non-brittle manner. In an alternative embodiment, densification can additionally and/or alternatively include other methodologies such as, but not limited to, melt infiltration (MI), slurry infiltration, and polymer infiltration and pyrolysis (PIP).

A CMC component formed with the disclosed space filling inserts can be incorporated into aerospace, maritime, or industrial equipment, to name a few, non-limiting examples.

### Discussion of Possible Embodiments

The following are non-exclusive descriptions of possible embodiments of the present invention.

In an aspect of the invention a method of fabricating a variable geometry space filling insert for a ceramic matrix composite component includes arranging a plurality of fiber bodies into a preform insert (e.g., to form a preform insert), applying a polymer binder to the plurality of fiber bodies, trimming at least a first subset of the plurality of fiber bodies such that each of the first subset of fiber bodies is shorter than at least a second subset of fiber bodies, shaping the insert (the preform insert) with a forming tool to form a shaped insert.

The method may optionally include, additionally and/or alternatively, any one or more of the following features, configurations and/or additional steps:
In any of the aspects or embodiments described above or herein, each of the plurality of fiber bodies may be formed from or comprise silicon carbide.

In any of the aspects or embodiments described above or herein, each of the plurality of fiber bodies may be or comprise a silicon carbide tow.

In any of the aspects or embodiments described above or herein, each of the plurality of fiber bodies may be or comprise a strand of braided tows.

In any of the aspects or embodiments described above or herein, the method may further include incorporating a plurality of PVA yarns into the preform insert.

In any of the aspects or embodiments described above or herein, the method may further include wrapping a fabric sheath around the plurality of fiber bodies.

In any of the aspects or embodiments described above or herein, the fabric sheath may include silicon carbide.

In any of the aspects or embodiments described above or herein, the polymer binder may include one of PVA and PVB.

In any of the aspects or embodiments described above or herein, the polymer binder may include silicon carbide particles.

In any of the aspects or embodiments described above or herein, the method may further include trimming a third subset of the plurality of fiber bodies such that each of the third subset of fiber bodies is shorter than the first subset and the second subset of fiber bodies.

In any of the aspects or embodiments described above or herein, the method may further include stabilizing the preform insert in the forming tool using one or a combination of mechanical compression, vacuum, vacuum compression, and heat.

In another aspect of the invention a method of forming a ceramic matrix composite component includes fabricating a variable geometry space filling insert using the methods of any of the aspects or embodiments described above or herein, incorporating the insert into a preform (a preform component), and densifying the preform with a ceramic matrix (e.g., to form a shaped component).

In any of the aspects or embodiments described above or herein, the step of densifying the preform may include at least one of: chemical vapor infiltration, polymer infiltration and pyrolysis, melt infiltration, and slurry infiltration.

In another aspect of the invention a variable geometry space filling insert for use in a ceramic matrix composite component includes a plurality of fiber bodies in a bundle, the bundle including a first subset of fiber bodies, and a second subset of fiber bodies, each being longer than each of the first subset of fiber bodies.

In any of the aspects or embodiments described above or herein, the insert may optionally include, additionally and/or alternatively, any one or more of the following features, configurations and/or additional components:
In any of the aspects or embodiments described above or herein, each of the plurality of fiber bodies may be or comprise a silicon carbide tow.

In any of the aspects or embodiments described above or herein, each of the plurality of fiber bodies may be or comprise a strand of braided tows.

In any of the aspects or embodiments described above or herein, the bundle may further include a plurality of polymer yarns, the plurality of polymer yarns comprising polyvinyl alcohol.

In any of the aspects or embodiments described above or herein, the inset may further include a third subset of fiber bodies, each being shorter than each of the first subset and second subset of fiber bodies.

In any of the aspects or embodiments described above or herein, the inset may further include a fabric sheath wrapped around the bundle.

In any of the aspects or embodiments described above or herein, the inset may further include silicon carbide particles.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of fabricating a variable geometry space filling insert (12) for a ceramic matrix composite component, the method comprising:
arranging a plurality of fiber bodies (26A; 26B; 26C; 26D) into a preform insert (12A; 12B; 12C; 12D);
applying a polymer binder to the plurality of fiber bodies (26A; 26B; 26C; 26D);
trimming at least a first subset of the plurality of fiber bodies (26A; 26B; 26C; 26D) such that each of the first subset of fiber bodies (26A; 26B; 26C; 26D) is shorter than at least a second subset of fiber bodies (26A; 26B; 26C; 26D); and
shaping the insert (12) with a forming tool to form a shaped insert (12).

2. The method of claim 1, wherein each of the plurality of fiber bodies (26A; 26B; 26C; 26D) is formed from silicon carbide.

3. The method of claim 1 or 2, wherein each of the plurality of fiber bodies (26A; 26B; 26C; 26D) is a silicon carbide tow or a strand of braided tows.

4. The method of any preceding claim, further comprising incorporating a plurality of PVA yarns (30D) into the preform insert (12D).

5. The method of any preceding claim, further comprising wrapping a fabric sheath (28C; 28D) around the plurality of fiber bodies (26C; 26D), wherein, optionally, the fabric sheath (28C; 28D) comprises silicon carbide.

6. The method of any preceding claim, wherein the polymer binder comprises one of PVA and PVB.

7. The method of any preceding claim, wherein the polymer binder comprises silicon carbide particles.

8. The method of any preceding claim, further comprising:
trimming a third subset of the plurality of fiber bodies (26A; 26B; 26C; 26D) such that each of the third subset of fiber bodies (26A; 26B; 26C; 26D) is shorter than the first subset and the second subset of fiber bodies (26A; 26B; 26C; 26D); and/or
stabilizing the preform insert (12A; 12B; 12C; 12D) in the forming tool using one or a combination of mechanical compression, vacuum, vacuum compression, and heat.

9. A method of forming a ceramic matrix composite component, the method comprising:
fabricating a variable geometry space filling insert (12) using the method of any preceding claim;
incorporating the insert (12) into a preform (10); and
densifying the preform (10) with a ceramic matrix,
wherein the step of densifying the preform (10) optionally comprises at least one of: chemical vapor infiltration, polymer infiltration and pyrolysis, melt infiltration, and slurry infiltration.

10. A variable geometry space filling insert (12) for use in a ceramic matrix composite component, the insert (12) comprising:
a plurality of fiber bodies (26A; 26B; 26C; 26D) in a bundle, the bundle comprising:
a first subset of fiber bodies (26A; 26B; 26C; 26D); and
a second subset of fiber bodies (26A; 26B; 26C; 26D), each being longer than each of the first subset of fiber bodies (26A; 26B; 26C; 26D).

11. The insert (12) of claim 10, wherein each of the plurality of fiber bodies (26A; 26B; 26C; 26D) is a silicon carbide tow or a strand of braided tows.

12. The insert (12) of claim 10 or 11, wherein the bundle further comprises a plurality of PVA yarns (30D).

13. The insert (12) of claim 10, 11 or 12, further comprising a third subset of fiber bodies (26A; 26B; 26C; 26D), each being shorter than each of the first subset and second subset of fiber bodies (26A; 26B; 26C; 26D).

14. The insert (12) of any of claims 10 to 13, further comprising a fabric sheath (28C; 28D) wrapped around the bundle.

15. The insert (12) of any of claims 10 to 14, further comprising silicon carbide particles.

## Patentansprüche

1. Verfahren zur Herstellung eines raumfüllenden Einsatzes (12) mit variabler Geometrie für eine keramische Matrix-Verbundkomponente, wobei das Verfahren umfasst:
Anordnen einer Vielzahl von Faserkörpern (26A; 26B; 26C; 26D) zu einem Vorformeinsatz (12A; 12B; 12C; 12D);
Aufbringen eines Polymerbindemittels auf die Vielzahl von Faserkörpern (26A; 26B; 26C; 26D);
Zuschneiden zumindest einer ersten Teilmenge der Vielzahl von Faserkörpern (26A; 26B; 26C; 26D), sodass jeder der ersten Teilmenge von Faserkörpern (26A; 26B; 26C; 26D) kürzer ist als zumindest eine zweite Teilmenge von Faserkörpern (26A; 26B; 26C; 26D); und
Formen des Einsatzes (12) mit einem Formwerkzeug zur Bildung eines geformten Einsatzes (12).

2. Verfahren nach Anspruch 1, wobei jeder der Vielzahl von Faserkörpern (26A; 26B; 26C; 26D) aus Siliciumcarbid gebildet ist.

3. Verfahren nach Anspruch 1 oder 2, wobei jeder der Vielzahl von Faserkörpern (26A; 26B; 26C; 26D) ein Siliciumcarbid-Tow oder ein Strang aus geflochtenen Tows ist.

4. Verfahren nach einem der vorhergehenden Ansprüche, ferner umfassend das Einbringen einer Vielzahl von PVA-Garnen (30D) in den Vorformeinsatz (12D).

5. Verfahren nach einem der vorhergehenden Ansprüche, ferner umfassend das Umhüllen der Vielzahl von Faserkörpern (26C; 26D) mit einer Gewebehülle (28C; 28D), wobei die Gewebehülle (28C; 28D) optional Siliciumcarbid umfasst.

6. Verfahren nach einem der vorhergehenden Ansprüche, wobei das Polymerbindemittel eines aus PVA und PVB umfasst.

7. Verfahren nach einem der vorhergehenden Ansprüche, wobei das Polymerbindemittel Siliciumcarbidpartikel umfasst.

8. Verfahren nach einem der vorhergehenden Ansprüche, ferner umfassend:
Zuschneiden einer dritten Teilmenge der Vielzahl von Faserkörpern (26A; 26B; 26C; 26D), sodass jede der dritten Teilmenge von Faserkörpern (26A; 26B; 26C; 26D) kürzer ist als die erste Teilmenge und die zweite Teilmenge von Faserkörpern (26A; 26B; 26C; 26D); und/oder
Stabilisieren des Vorformeinsatzes (12A; 12B; 12C; 12D) in dem Formwerkzeug unter Verwendung von einem oder einer Kombination aus mechanischer Kompression, Vakuum, Vakuumkompression und Wärme.

9. Verfahren zur Herstellung einer keramischen Matrix-Verbundkomponente, wobei das Verfahren umfasst:
Herstellen eines raumfüllenden Einsatzes (12) mit variabler Geometrie unter Verwendung des Verfahrens nach einem der vorhergehenden Ansprüche;
Einbringen des Einsatzes (12) in eine Vorform (10); und
Verdichten der Vorform (10) mit einer keramischen Matrix,
wobei der Schritt des Verdichtens der Vorform (10) optional mindestens eines von: chemische Gasphaseninfiltration, Polymerinfiltration und Pyrolyse, Schmelzinfiltration und Schlickerinfiltration umfasst.

10. Raumfüllender Einsatz (12) mit variabler Geometrie zur Verwendung in einer keramischen Matrix-Verbundkomponente, wobei der Einsatz (12) umfasst:
eine Vielzahl von Faserkörpern (26A; 26B; 26C; 26D) in einem Bündel, wobei das Bündel umfasst:
eine erste Teilmenge von Faserkörpern (26A; 26B; 26C; 26D); und eine zweite Teilmenge von Faserkörpern (26A; 26B; 26C; 26D), wobei jeder länger ist als jeder der ersten Teilmenge von Faserkörpern (26A; 26B; 26C; 26D).

11. Einsatz (12) nach Anspruch 10, wobei jeder der Vielzahl von Faserkörpern (26A; 26B; 26C; 26D) ein Siliciumcarbid-Tow oder ein Strang aus geflochtenen Tows ist.

12. Einsatz (12) nach Anspruch 10 oder 11, wobei das Bündel ferner eine Vielzahl von PVA-Garnen (30D) umfasst.

13. Einsatz (12) nach Anspruch 10, 11 oder 12, ferner umfassend eine dritte Teilmenge von Faserkörpern (26A; 26B; 26C; 26D), wobei jeder kürzer ist als jeder der ersten Teilmenge und der zweiten Teilmenge von Faserkörpern (26A; 26B; 26C; 26D).

14. Einsatz (12) nach einem der Ansprüche 10 bis 13, ferner umfassend eine Gewebehülle (28C; 28D), die um das Bündel gewickelt ist.

15. Einsatz (12) nach einem der Ansprüche 10 bis 14, ferner umfassend Siliciumcarbidpartikel.

## Revendications

1. Procédé de fabrication d'un insert (12) de remplissage d'espace à géométrie variable pour un composant composite à matrice céramique, le procédé comprenant :
l'agencement d'une pluralité de corps de fibres (26A ; 26B ; 26C ; 26D) dans un insert de préforme (12A ; 12B ; 12C ; 12D) ; l'application d'un liant polymère à la pluralité de corps de fibres (26A ; 26B ; 26C ; 26D) ;
le raccourcissement d'au moins un premier sous-ensemble de la pluralité de corps de fibres (26A ; 26B ; 26C ; 26D) de telle sorte que chacun du premier sous-ensemble de corps de fibres (26A ; 26B ; 26C ; 26D) soit plus court qu'au moins un deuxième sous-ensemble de corps de fibres (26A ; 26B ; 26C ; 26D) ; et
le façonnage de l'insert (12) avec un outil de formage pour former un insert (12) façonné.

2. Procédé selon la revendication 1, dans lequel chacun de la pluralité de corps de fibres (26A ; 26B ; 26C ; 26D) est formé de carbure de silicium.

3. Procédé selon la revendication 1 ou 2, dans lequel chacun de la pluralité de corps de fibres (26A ; 26B ; 26C ; 26D) est un câble de carbure de silicium ou un brin de câbles tressés.

4. Procédé selon une quelconque revendication précédente, comprenant en outre l'incorporation d'une pluralité de fils PVA (30D) dans l'insert de préforme (12D).

5. Procédé selon une quelconque revendication précédente, comprenant en outre l'enroulement d'une gaine de tissu (28C ; 28D) autour de la pluralité de corps de fibres (26C ; 26D), dans lequel, éventuellement, la gaine de tissu (28C ; 28D) comprend du carbure de silicium.

6. Procédé selon une quelconque revendication précédente, dans lequel le liant polymère comprend l'un parmi PVA et PVB.

7. Procédé selon une quelconque revendication précédente, dans lequel le liant polymère comprend des particules de carbure de silicium.

8. Procédé selon une quelconque revendication précédente, comprenant en outre :
le raccourcissement d'au moins un troisième sous-ensemble de la pluralité de corps de fibres (26A ; 26B ; 26C ; 26D) de telle sorte que chacun du troisième sous-ensemble de corps de fibres (26A ; 26B ; 26C ; 26D) soit plus court que le premier sous-ensemble et le deuxième sous-ensemble de corps de fibres (26A ; 26B ; 26C ; 26D) ; et/ou
la stabilisation de l'insert de préforme (12A ; 12B ; 12C ; 12D) dans l'outil de formage à l'aide d'un ou d'une combinaison de compression mécanique, de vide, de compression sous vide et de chaleur.

9. Procédé de formation d'un composant composite à matrice céramique, le procédé comprenant :
la fabrication d'un insert (12) de remplissage d'espace à géométrie variable à l'aide du procédé selon une quelconque revendication précédente ;
l'incorporation de l'insert (12) dans une préforme (10) ; et
la densification de la préforme (10) avec une matrice céramique, dans lequel l'étape de densification de la préforme (10) comprend éventuellement au moins l'un de : infiltration de vapeur chimique, infiltration de polymère et pyrolyse, infiltration de matière fondue et infiltration de suspension.

10. Insert (12) de remplissage d'espace à géométrie variable à utiliser dans un composant composite à matrice céramique, l'insert (12) comprenant :
une pluralité de corps de fibres (26A ; 26B ; 26C ; 26D) dans un faisceau, le faisceau comprenant :
un premier sous-ensemble de corps de fibres (26A ; 26B ; 26C ; 26D) ; et
un deuxième sous-ensemble de corps de fibres (26A ; 26B ; 26C ; 26D), chacun étant plus long que chacun du premier sous-ensemble de corps de fibres (26A ; 26B ; 26C ; 26D).

11. Insert (12) selon la revendication 10, dans lequel chacun de la pluralité de corps de fibres (26A ; 26B ; 26C ; 26D) est un câble de carbure de silicium ou un brin de câbles tressés.

12. Insert (12) selon la revendication 10 ou 11, dans lequel le faisceau comprend en outre une pluralité de fils PVA (30D).

13. Insert (12) selon la revendication 10, 11 ou 12, comprenant en outre un troisième sous-ensemble de corps de fibres (26A ; 26B ; 26C ; 26D), chacun étant plus court que chacun du premier sous-ensemble et du deuxième sous-ensemble de corps de fibres (26A ; 26B ; 26C ; 26D).

14. Insert (12) selon l'une quelconque des revendications 10 à 13, comprenant en outre une gaine en tissu (28C ; 28D) enroulée autour du faisceau.

15. Insert (12) selon l'une quelconque des revendications 10 à 14, comprenant en outre des particules de carbure de silicium.
